# EUROPEAN PATENT SPECIFICATION

(11) **EP 3 088 941 B1**
(45) Date of publication and mention of the grant of the patent: **07.02.2018**
(21) Application number: 15197321.1
(22) Date of filing: 01.12.2015
(51) Int. Cl.: G02F 1/1333, G06F 3/041

(54) **LIQUID CRYSTAL DISPLAY, METHOD AND DEVICE FOR MEASURING PRESSURE**
FLÜSSIGKRISTALLANZEIGE, VERFAHREN UND VORRICHTUNG ZUR MESSUNG VON DRUCK
AFFICHAGE À CRISTAUX LIQUIDES, PROCÉDÉ ET DISPOSITIF DE MESURE DE PRESSION

(30) Priority: 30.04.2015 CN 201510213518
(43) Date of publication of application: 02.11.2016
(73) Proprietor: Xiaomi Inc., Beijing 100085 (CN)
(72) Inventor: LIU, Anyu, 100085 Haidian District (CN); LI, Guosheng, 100085 Haidian District (CN); JIANG, Zhongsheng, 100085 Haidian District (CN)
(74) Representative: Sadler, Peter Frederick

(56) References cited:
- US-A1- 2007 195 029
- US-A1- 2010 079 381
- US-A1- 2014 247 239
- US-A1- 2015 070 305

## Description

### TECHNICAL FIELD

The present disclosure generally relates to the technical field of displays, and more particularly, to liquid crystal displays (LCD), and a method and a device for measuring a pressure.

### BACKGROUND

With the development of LCD technology, LCDs have become increasingly versatile. For example, a LCD can have a function of measuring a pressure.

In the related art, there is provided a LCD, including a display panel, a touch panel and a film containing a pressure sensor, each of which is electrically connected to a control chip. The bottom surface of the film is adhered to the top surface of the touch panel, and the bottom surface of the touch panel is adhered to the top surface of the display panel. When a user operates the LCD, the film can acquire a pressure value operated on the LCD, and send it to the control chip. The touch panel can acquire an operation position of the user and send it to the control chip. The control chip processes the received pressure value and the operation position, and control the display of the LCD according to the processed result.

US Patent Application 2015/070305 describes a touch sensing display comprising a thin film transistor array panel including a thin film transistor, and an opposing display panel facing the thin film transistor array panel. The opposing display panel includes a piezoelectric sensor. US Patent Application US2014/0247239 describes a touch sensitive device that can detect the amount of pressure applied to a touch screen. A spacer of the touch screen is coated with a layer of conductive material and the change in capacitance between the spacer and various circuit elements of the touch screen is measured. US2007/0195029 describes a display panel that includes an array substrate and an opposite substrate. Connecting members included on the opposite substrate are electrically connected to signal lines on the array substrate such that when an externally provided pressure is applied to the display panel to perform a touch screen function alignment of liquid crystals on the array substrate are not substantially changed, so as to improve display quality. US 2010/0079381 describes a display panel with a first substrate section formed on the front side of the display panel and a second substrate section opposed to the first substrate section. A plurality of sensor sections are provided and have two electrodes, one electrode disposed with an electrode-2-electrode gap from the other between the first and second substrate sections, the electrode-2-electrode gap being removed as a result of deformation of the first substrate section under pressure.

### SUMMARY

In order to overcome the problem that the LCD will have a complex structure with a film for measuring the pressure value, the present disclosure provides a LCD, a method and a device for measuring a pressure.

According to a first aspect of embodiments of the present disclosure, there is provided a LCD, including: a display panel and a touch panel, each electrically connected to a control chip, a top surface of the display panel is adhered to a bottom surface of the touch panel;
the display panel includes: a lower substrate; an upper substrate disposed in parallel with the lower substrate; a liquid crystal layer and a number n of wires enclosed in a cavity defined by the upper substrate and the lower substrate; an array of protruding spacers disposed inside the cavity, the array of protruding spacers being formed on at least one of a bottom surface of the upper substrate and a top surface of the lower substrate, where n is a positive integer;
each of the wires inside the cavity comprises first and second segments, the first segment having a first conductive terminal and the second segment having a second conductive terminal, located between either end of the wire along the length of the wire within the cavity, the opening between the first conductive terminal and the second conductive terminal, forming a switch opening that faces one of the spacers;
the LCD being configured such that the first conductive terminal and the second conductive terminal are electrically disconnected when a pressure is not applied to the LCD, whereby a corresponding spacer is not pressed down; the LCD being configured such that the first conductive terminal and the second conductive terminal are electrically connected by the corresponding spacer when a pressure is applied to the LCD, whereby the corresponding spacer is pressed down; and
the switch opening is located on the opposite substrate to the substrate where the corresponding spacer is formed.

According to a second aspect of embodiments of the present disclosure, there is provided a method of measuring a pressure applied to the LCD of the first aspect, including:
when a press operation acted on the LCD is performed, acquiring a signal generated by each wire when its first conductive terminal and second conductive terminal are electrically connected under the action of the press operation;
counting a total number of the signals; and
determining a pressure value of the press operation according to the total number.

According to a third aspect of embodiments of the present disclosure, there is provided an LCD of the first aspect, including:
a signal-acquiring module configured to, when a press operation acted on the LCD is performed, acquire a signal generated by each wire when its first conductive terminal and second conductive terminal are electrically connected under the action of the press operation;
a counting module configured to count a total number of the signals acquired by the signal-acquiring module; and
a pressure-value-determining module configured to determine a pressure value of the press operation according to the total number counted by the counting module.

According to a fourth aspect of embodiments of the present disclosure, there is provided a device for measuring a pressure, including:
the LCD of the first aspect;
a processor; and
a memory for storing instructions executable by the processor;
wherein the processor is configured to perform:
when a press operation acted on the LCD is performed, acquiring a signal generated by each wire when its first conductive terminal and second conductive terminal are electrically connected under the action of the press operation;
counting a total number of the signals; and
determining a pressure value of the press operation according to the total number.

According to a fifth aspect of embodiments of the present disclosure, there is provided a computer program, which when being executed on a processor, performs the method according to the above second aspect.

According to a sixth aspect of embodiments of the present disclosure, there is provided a computer program product stored on a computer usable medium, comprising computer-readable program means for causing a device to implement the method according to the above second aspect.

The advantageous effects brought by the technical solutions according to the embodiments of the present disclosure may include:
in the LCD provided by the present disclosure, wires are disposed in a cavity defined by an upper substrate and a lower substrate; each of the wires inside the cavity has a first conductive terminal and a second conductive terminal somewhere along its center portion between either ends of the wire, and a switch opening which can be configured to connect the first conductive terminal and the second conductive terminal faces one spacer; the first conductive terminal and the second conductive terminal are electrically disconnected when the corresponding spacer is not pressed down; and the first conductive terminal and the second conductive terminal are electrically connected when the corresponding spacer is pressed down. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic view of a LCD according to an exemplary embodiment.
Fig. 2A is a schematic view of positions of a wire and a spacer according to an exemplary embodiment.
Fig. 2B is a schematic view of a first distribution of switch openings according to an exemplary embodiment.
Fig. 2C is a schematic view of a second distribution of switch openings according to an exemplary embodiment.
Fig. 2D is a schematic view of wires according to an exemplary embodiment.
Fig. 3 is a flow chart of a method for measuring a pressure according to an exemplary embodiment.
Fig. 4 is a flow chart of a method for measuring a pressure according to another exemplary embodiment.
Fig. 5 is a block diagram of a device for measuring a pressure according to an exemplary embodiment.
Fig. 6 is a block diagram of a device for measuring a pressure according to an exemplary embodiment.
Fig. 7 is a block diagram of a device for measuring a pressure according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

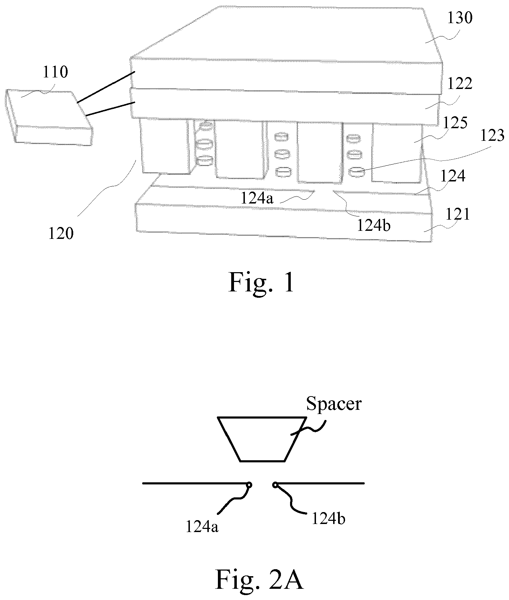

Fig. 1 is a schematic view of a LCD according to an exemplary embodiment. The LCD 100 includes: a display panel 120 and a touch panel 130, each electrically connected to a control chip 110, and a top surface of the display panel 120 is adhered to a bottom surface of the touch panel 130.

The display panel 120 includes: a lower substrate 121; an upper substrate 122 disposed in parallel with the lower substrate 121; a liquid crystal layer 123 and a number n of wires 124 enclosed in a cavity defined by the upper substrate 122 and the lower substrate 121; an array of protruding spacers 125 disposed inside the cavity, the array of protruding spacers 125 being formed on at least one of a bottom surface of the upper substrate 122 and a top surface of the lower substrate 121, where n is a positive integer.

Each of the wires 124 inside the cavity has a first conductive terminal 124a and a second conductive terminal 124b along the length of the wire within the cavity, and a switch opening which can be configured to connect the first conductive terminal 124a and the second conductive terminal 124b faces one of the spacers.

The first conductive terminal 124a and the second conductive terminal 124b are electrically disconnected when the corresponding spacer is not pressed down; and
the first conductive terminal 124a and the second conductive terminal 124b are electrically connected when the corresponding spacer is pressed down.

Accordingly, in the LCD provided by the present disclosure, wires are disposed in a cavity defined by an upper substrate and a lower substrate; each of the wires inside the cavity has a first conductive terminal and a second conductive terminal at its center portion, between either end of the wire and along the length of the wire within the cavity, and a switch opening, which can be configured to connect the first conductive terminal and the second conductive terminal, faces one spacer; the first conductive terminal and the second conductive terminal are electrically disconnected when the corresponding spacer is not pressed down; and the first conductive terminal and the second conductive terminal are electrically connected when the corresponding spacer is pressed down. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

As shown in Fig. 1, a LCD 100 according to another exemplary embodiment includes: a display panel 120 and a touch panel 130, each electrically connected to a control chip 110, and a top surface of the display panel 120 is adhered to a bottom surface of the touch panel 130.

Wherein, the touch panel 130 can receive a press operation triggered by a user on the touch panel 130, and sends information about the press operation to the control chip 110. After it processes the information about the press operation, the control chip 110 controls the display panel 120 to display relevant contents.

The display panel 120 includes: a lower substrate 121; an upper substrate 122 disposed in parallel with the lower substrate 121; a liquid crystal layer 123 and a number n of wires 124 enclosed in a cavity defined by the upper substrate 122 and the lower substrate 121; an array of protruding spacers 125 disposed inside the cavity, the array of protruding spacers 125 being formed on at least one of a bottom surface of the upper substrate 122 and a top surface of the lower substrate 121, where n is a positive integer.

In one possible implementation, the lower substrate 121 may be a Thin Film Transistor (TFT) substrate, and the upper substrate 122 can be a Color Filter (CF) substrate. The upper substrate 122 and the lower substrate 121 are not limited in the present embodiment.

In the present embodiment, since the lower substrate 121 and the upper substrate 122 are required to form a cavity to enclose the liquid crystal layer 123, the array of spacers 125 is used to support the lower substrate 121 and the upper substrate 122 and form the cavity. Wherein, the array of spacers 125 can be entirely formed on the top surface of the lower substrate 121; or entirely formed on the bottom surface of the upper substrate 122; or partly formed on the top surface of the lower substrate 121 and partly formed on the bottom surface of the upper substrate 122.

Wherein, when the array of spacers 125 is partly formed on the top surface of the lower substrate 121 and partly formed on the bottom surface of the upper substrate 122, each of the spacers formed on the top surface of the lower substrate 121 can face one of the spacers formed on the bottom surface of the upper substrate 122, or they can be staggered, which will not be limited in the present embodiment.

It should be noted that, since the liquid crystal layer 123 is enclosed in the cavity, the distribution of the spacers in the array of spacers 125 cannot affect the turning of the liquid crystals under the voltage control, to ensure the display effect.

Each of the wires 124 inside the cavity has a first conductive terminal 124a and a second conductive terminal 124b positioned along the length of the wire within the cavity, and a switch opening, which can be configured to connect the first conductive terminal 124a and the second conductive terminal 124b, faces one of the spacers; the first conductive terminal 124a and the second conductive terminal 124b are electrically disconnected when the corresponding spacer is not pressed down; and the first conductive terminal 124a and the second conductive terminal 124b are electrically connected when the corresponding spacer is pressed down.

Wherein, a switch opening refers to a switch formed at an opening between the first conductive terminal 124a and the second conductive terminal 124b. Each of the wires 124 includes one switch opening, and the switch opening faces one spacer. Wherein, the switch opening facing one spacer means that the projected line of the switch opening on the substrate is inside the projected plane of the spacer on the same substrate which is the opposite substrate of the substrate where the spacer is formed. For example, in case where the spacer is formed on the top surface of the lower substrate 121, the projected line of the switch opening on the upper substrate 122 is in inside the projected plane of the spacer on the same substrate; in case where the spacer is formed on the bottom surface of the upper substrate 122, the projected line of the switch opening on the lower substrate 121 is in inside the projected plane of the spacer on the lower substrate 121. Referring to Fig. 2A, which is a schematic view of positions of a wire and a spacer. In Fig. 2A, as an example, the spacer is formed on the bottom surface of the upper substrate 122.

Since the top surface of the display panel 120 is adhered to the bottom surface of the touch panel 130, when the press operation is acted on the touch panel 130, the upper substrate 122 of the display panel 120 will be pressed down, and spacers will be pressed down. Since the spacers are made of conductive material, or the bottom surfaces of the spacers are coated with conductive material, when a spacer is pressed down, a corresponding pair of a first conductive terminal 124a and a second conductive terminal 124b can be closed such that the first conductive terminal 124a and the second conductive terminal 124b are electrically connected. At this time, the wire 124 forms a loop with the control chip 110, and sends a signal to the control chip 110. When a spacer is not pressed down, a corresponding pair of a first conductive terminal 124a and a second conductive terminal 124b is opened such that the first conductive terminal 124a and the second conductive terminal 124b are electrically disconnected. At this time, the wire 124 does not send a signal to the control chip 110.

Since the *n* wires 124 are inside the cavity, they should be evenly distributed in the cavity such that a number of wires 124 in per unit of area is larger than a predetermined threshold to ensure that when a user performs a press operation at any position on the LCD 100, the pressure value of the press operation can be measured. Wherein, the predetermined threshold may be an empirical value or a calculated value, which is not limited in the present embodiment.

In the present embodiment, two implementations of evenly distributing the *n* wires in the cavity are provided as follows.

In a first implementation, the array of spacers 125 includes *i* rows of spacers, the *n* wires 124 are distributed inside the cavity row by row, and each of the wires 124 is disposed below one row of spacers, where *i* is a positive integer and *i*≥*n.* In this case, two rows of spacers distributed over two adjacent wires 124 are adjacent to each other or separated by a predetermined number of rows.

Wherein, the predetermined number of rows can be a fixed number of rows. For example, a row of spacers distributed over a first wire 124 is separated from a row of spacers distributed over a second wire 124 by two rows, and the row of spacers distributed over the second wire 124 is separated from a row of spacers distributed over a third wire 124 by two rows. Alternatively, the predetermined number of rows can be a varied number of rows. For example, the row of spacers distributed over the first wire 124 is separated from the row of spacers distributed over the second wire 124 by two rows, and the row of spacers distributed over the second wire 124 is separated from the row of spacers distributed over the third wire 124 by four rows. This is not limited in the present embodiment.

Optionally, the *n* wires 124 include at least two groups of wires 124. In case where the *n* wires 124 are distributed row by row, for each group of wires 124, switch openings are distributed evenly as staggered with each switch opening being at a different position of a row.

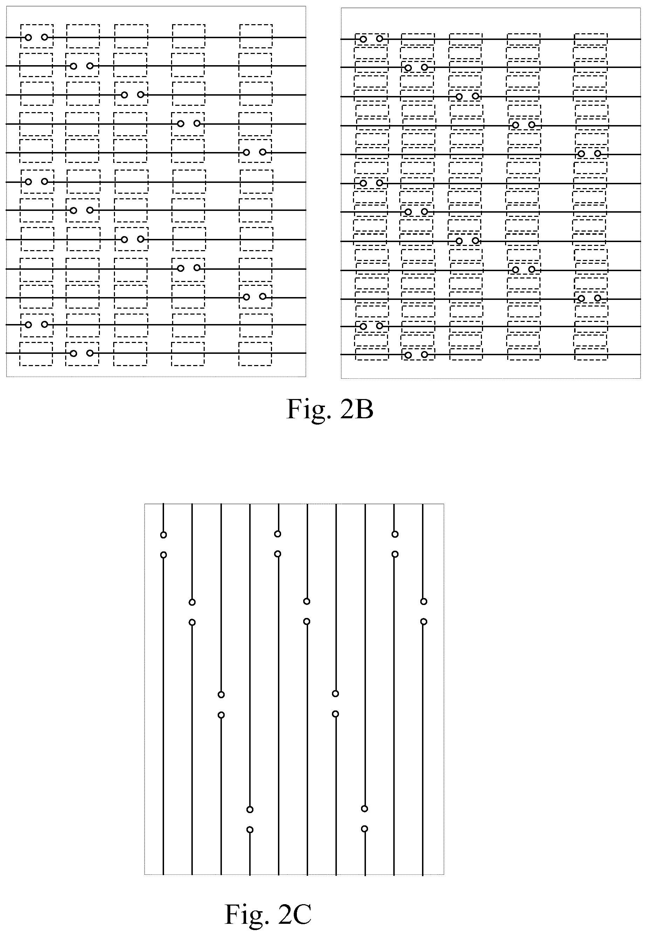

Since the switch openings of the n wires 124 are distributed evenly as staggered with each switch opening being at a different position of a row, the LCD 100 may have a large area in which no switch opening is present, resulting in the problem that the pressure value of the press operation by the user acted on such area cannot be measured. In this regard, the *n* wires 124 can be divided into at least two groups, and for each group of wires 124, switch openings are distributed evenly as staggered with each switch opening being at a different position of a row. For illustration purpose, in the present embodiment, as an example, at least two groups of wires 124 with switches as switch openings are described. Fig. 2B is a schematic view of a first distribution of switch openings. As shown in Fig. 2B, dashed boxes represent projected planes of spacers. In the left part of Fig. 2B, two rows of spacers distributed over adjacent wires 124 are adjacent to each other, while in the right part of the Fig. 2B, two rows of spacers distributed over adjacent wires 124 are separated by a predetermined number of rows. In this case, it is assumed the predetermined number of rows is one row.

In a second implementation, the array of spacers 125 includes *j* columns of spacers, the *n* wires 124 are distributed inside the cavity column by column, and each of the wires 124 is disposed below one column of spacers, where *j* is a positive integer and *j≥n.* In this case, two columns of spacers distributed over two adjacent wires 124 are adjacent to each other or separated by a predetermined number of columns.

Wherein, the predetermined number of columns can be a fixed number of columns or a varied number of columns. The details can be referred to the above description, which will not be repeated herein.

Similarly, in order to prevent the problem that when the switch openings of the n wires 124 are distributed evenly as staggered with each switch opening being at a different position of a column, the LCD 100 may have a large area in which no switch opening is present, resulting the problem that the pressure value of the press operation by the user acted on such area cannot be measured, in the present embodiment, the *n* wires 124 include at least two groups of wires 124. In case where the n wires 124 are distributed column by column, for each group of wires 124, switch openings are distributed evenly as staggered with each switch opening being at a different position of a column. For illustration purpose, in the present embodiment, as an example, at least two groups of wires 124 with switches as switch openings are described. Fig. 2C is a schematic view of a second distribution of switch openings. As shown in Fig. 2C, dashed boxes represent projected planes of spacers, and two columns of spacers distributed over adjacent wires 123 are adjacent to each other.

It should be noted that the wires 124 can be metal wires. Alternatively, In case where the array of spacers 125 is formed on the bottom surface of the upper substrate 122, the wires 124 are disposed as one row of conductive pattern or one column of conductive pattern on the top surface of the lower substrate 121; or in case where the array of spacers 125 is formed on the top surface of the lower substrate 121, the wires 124 are disposed as one row of conductive pattern or one column of conductive pattern on the bottom surface of the upper substrate 122.

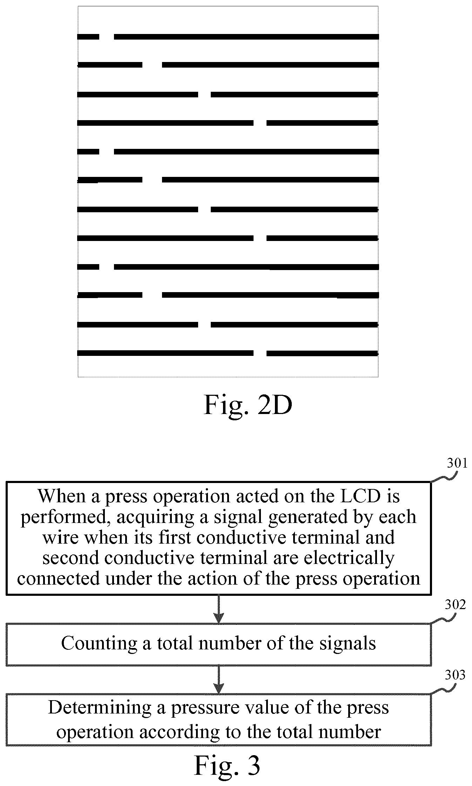

The conductive pattern can be a pattern etched on the upper substrate 122 or the lower substrate 121. The configuration of the conductive pattern is not limited in the present embodiment. Fig. 2D is a schematic view of the wires. In Fig. 2D, as an example, the array of spacers 125 is formed on the top surface of the lower substrate 121, the wires 124 are disposed as one row of conductive pattern on the bottom surface of the upper substrate 122, and the conductive pattern is assumed as a line.

Accordingly, in the LCD provided by the present disclosure, wires are disposed in a cavity defined by an upper substrate and a lower substrate; each of the wires inside the cavity has a first conductive terminal and a second conductive terminal along the length of the wire within the cavity, and a switch opening, which can be configured to connect the first conductive terminal and the second conductive terminal, faces one spacer; the first conductive terminal and the second conductive terminal are electrically disconnected when the corresponding spacer is not pressed down; and the first conductive terminal and the second conductive terminal are electrically connected when the corresponding spacer is pressed down. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

Fig. 3 is a flow chart of a method for measuring a pressure according to an exemplary embodiment, which is applied in the LCD as shown in Fig. 1. As shown in Fig. 3, the method for measuring a pressure includes the following steps.

In step 301, when a press operation acted on the LCD is performed, it is acquired a signal generated by each wire when its first conductive terminal and second conductive terminal are electrically connected under the action of the press operation.

In step 302, a total number of the signals is counted.

In step 303, a pressure value of the press operation is determined according to the total number.

Accordingly, in the method for measuring a pressure, it is acquired a signal generated by each wire when its first conductive terminal and second conductive terminal are electrically connected under the action of the press operation; a total number of the signals is counted; and a pressure value of the press operation is determined according to the total number. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

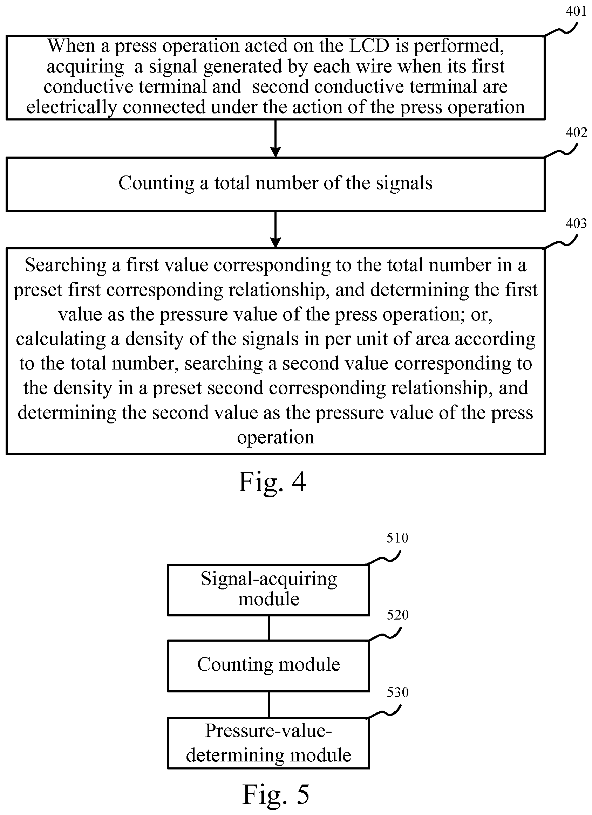

Fig. 4 is a flow chart of a method for measuring a pressure according to another exemplary embodiment, which is applied in the LCD as shown in Fig. 1. As shown in Fig. 4, the method for measuring a pressure includes the following steps.

In step 401, when a press operation acted on the LCD is performed, it is acquired a signal generated by each wire when its first conductive terminal and second conductive terminal are electrically connected under the action of the press operation.

When a user performs a press operation on the LCD, the upper substrate will be pressed down, such that the spacers connect the first conductive terminals and the second conductive terminals. When the first conductive terminals and the second conductive terminals are electrically connected, a signal will be generated by the wire. Thus, the control chip in the LCD can acquire the signals generated by the wires.

In step 402, a total number of the signals is counted.

Since the larger the pressure value of the press operation performed by the user, the more the spacers which connect the first conductive terminals and the second conductive terminals will be, and the more the wires which generate signals will be, the pressure value can be determined according to the total number of the generated signals.

In step 403, a first value corresponding to the total number is searched in a preset first corresponding relationship, and the first value is determined as the pressure value of the press operation; or a density of the signals in per unit of area is calculated according to the total number, a second value corresponding to the density is searched in a preset second corresponding relationship, and the second value is determined as the pressure value of the press operation.

In a first implementation, a first corresponding relationship can be previously set. The first corresponding relationship includes a corresponding relationship between a total number of signals and a pressure value. After the total number of the signals is counted, a corresponding pressure value can be searched in the first corresponding relationship according to the total number. Wherein, it can be one total number or a range of total numbers that corresponds to one pressure value, which is not limited in the present embodiment.

In a second implementation, a second corresponding relationship can be previously set. The second corresponding relationship includes a corresponding relationship between a density of signals and a pressure value. After the total number of the signals is counted, a density of the signals can be calculated according to the total number, and a corresponding pressure value can be searched in the second corresponding relationship. Wherein it can be one density or a range of densities that corresponds to one pressure value, which is not limited in the present embodiment.

Wherein, calculating a density of the signals in per unit of area according to the total number includes the following steps:
1) positions of the signals are acquired;
2) an area of a total region formed by all of the positions is calculated; and
3) the total number is divided by the area, to obtain the density of the signals in per unit of area.

Since when the wires are distributed, a position of each wire is recorded, the LCD can determine the wires which generate signals, determine the positions of the signals based on the positions of the wires, and combine all of the positions to form a total region which is the pressed region of the press operations. Finally, the total number is divided by the area of the total region, to obtain the density of the signals in per unit of area.

Accordingly, in the method for measuring a pressure, it is acquired a signal generated by each wire when its first conductive terminal and second conductive terminal are electrically connected under the action of the press operation; a total number of the signals is counted; and a pressure value of the press operation is determined according to the total number. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

In addition, a density of the signals in per unit of area is calculated according to the total number, a second value corresponding to the density is searched in a preset second corresponding relationship, and the second value is determined as the pressure value of the press operation. Thereby, it can improve the accuracy of the pressure value.

Fig. 5 is a block diagram of a device for measuring a pressure according to an exemplary embodiment, which is applied in the LCD as shown in Fig. 1. As shown in Fig. 5, the device for measuring a pressure includes: a signal-acquiring module 510, a counting module 520 and a pressure-value-determining module 530.

The signal-acquiring module 510 is configured to, when a press operation acted on the LCD is performed, acquire a signal generated by each wire when its first conductive terminal and second conductive terminal are electrically connected under the action of the press operation;
the counting module 520 is configured to count a total number of the signals acquired by the signal-acquiring module 510; and
the pressure-value-determining module 530 is configured to determine a pressure value of the press operation according to the total number counted by the counting module 520.

Accordingly, in the device for measuring a pressure, it is acquired a signal generated by each wire when its first conductive terminal and second conductive terminal are electrically connected under the action of the press operation; a total number of the signals is counted; and a pressure value of the press operation is determined according to the total number. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

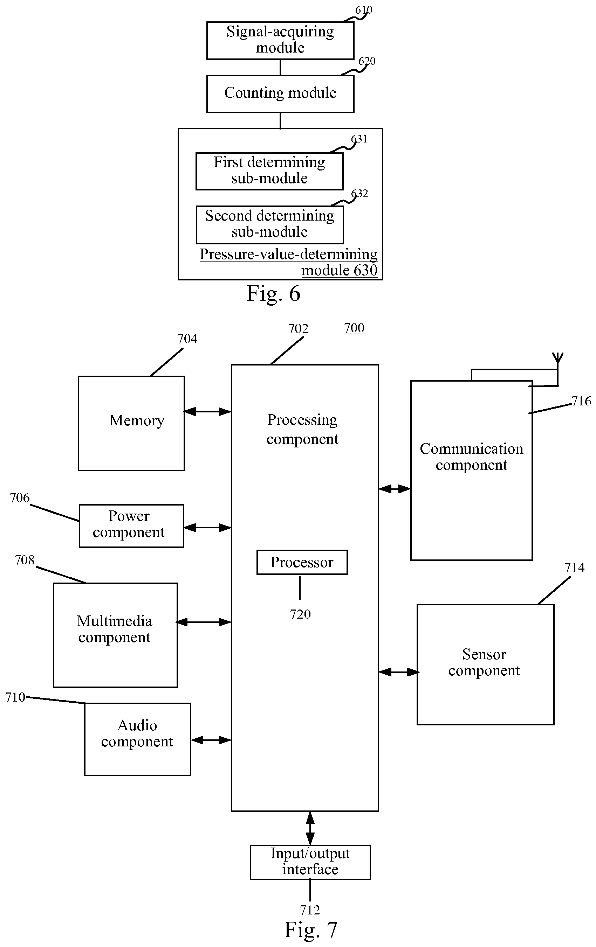

Fig. 6 is a block diagram of a device for measuring a pressure according to an exemplary embodiment, which is applied in the LCD as shown in Fig. 1. As shown in Fig. 6, the device for measuring a pressure includes: a signal-acquiring module 610, a counting module 620 and a pressure-value-determining module 630.

The signal-acquiring module 610 is configured to, when a press operation acted on the LCD is performed, acquire a signal generated by each wire when its first conductive terminal and second conductive terminal are electrically connected under the action of the press operation;
the counting module 620 is configured to count a total number of the signals acquired by the signal-acquiring module 610; and
the pressure-value-determining module 630 is configured to determine a pressure value of the press operation according to the total number counted by the counting module 620.

Optionally, the pressure-value-determining module 630 includes: a first determining sub-module 631 or a second determining sub-module 632.

The first determining sub-module 631 is configured to search a first value corresponding to the total number in a preset first corresponding relationship, and determine the first value as the pressure value of the press operation; or
the second determining sub-module 632 is configured to calculate a density of the signals in per unit of area according to the total number, search a second value corresponding to the density in a preset second corresponding relationship, and determine the second value as the pressure value of the press operation.

Accordingly, in the device for measuring a pressure, it is acquired a signal generated by each wire when its first conductive terminal and second conductive terminal are electrically connected under the action of the press operation; a total number of the signals is counted; and a pressure value of the press operation is determined according to the total number. Since when a user triggers a press operation on the LCD, spacers will be pressed down, and at this time, the first conductive terminals and the second conductive terminals of the wires corresponding to the spacers will be electrically connected by the spacers, that is, the wires are in conductive states, and a pressure value is in positive proportion to the number of the wires which are in conductive states. Thereby, the pressure value can be determined by the total number of the wires which are in conductive states. It can solve the problem that the LCD will have a complex structure with a film for measuring the pressure value, and it can achieve an effect of simplifying the structure of the LCD.

In addition, a density of the signals in per unit of area is calculated according to the total number, a second value corresponding to the density is searched in a preset second corresponding relationship, and the second value is determined as the pressure value of the press operation. Thereby, it can improve the accuracy of the pressure value.

With respect to the devices in the above embodiments, the specific manners for performing operations for individual modules therein have been described in detail in the embodiments regarding the relevant methods, which will not be elaborated herein.

An exemplary embodiment of the present disclosure provides a device for measuring a pressure, which is capable of implementing the method for measuring a pressure provided by the present disclosure. The device for measuring a pressure includes: the LCD as shown in Fig. 1, a processor, and a memory for storing instructions executable by the processor;
wherein the processor is configured to perform:
when a press operation acted on the LCD is performed, acquiring a signal generated by each wire when its first conductive terminal and second conductive terminal are electrically connected under the action of the press operation;
counting a total number of the signals; and
determining a pressure value of the press operation according to the total number.

Fig. 7 is a block diagram of a device 700 for measuring a pressure according to an exemplary embodiment. For example, the device 700 may be a device having a LCD, such as a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a LCD providing an output interface between the device 700 and the user. In some embodiments, the LCD may include a display panel (LCD) and a touch panel (TP). If the LCD includes the touch panel, the LCD may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

## Claims

1. A liquid crystal display LCD (100) comprising: a display panel (120) and a touch panel (130), each electrically connected to a control chip (110), a top surface of the display panel (120) being adhered to a bottom surface of the touch panel (130);
wherein the display panel (120) comprises: a lower substrate (121); an upper substrate (122) disposed in parallel with the lower substrate (121); a liquid crystal layer (123) and a number *n* of conductive wires (124) enclosed in the cavity defined by the upper substrate (122) and the lower substrate (121); an array of protruding spacers (125) disposed inside the cavity, the array of protruding spacers (125) being formed on at least one of the bottom surface of the upper substrate (122) and the top surface of the lower substrate (121), where *n* is a positive integer; **characterized in that** each of the wires (124) inside the cavity comprises first and second segments, the first segment having a first conductive terminal (124a) and the second segment having a second conductive terminal (124b), located between either end of the wire along the length of the wire within the cavity, the opening between the first conductive terminal and the second conductive terminal forming a switch together with a corresponding one of the spacers facing the openings; the LCD being configured such that the first conductive terminal (124a) and the second conductive terminal (124b) are electrically disconnected when a press operations is not applied to the LCD; the LCD being configured such that the first conductive terminal (124a) and the second conductive terminal (124b) are electrically connected by the corresponding spacer (125) when a press operation is applied to the LCD; the spacers (125) are made of conductive material, or the bottom surfaces of the spacers (125) are coated with conductive material;
and wherein:
the opening is located on the opposite substrate to the substrate where the corresponding spacer is formed.

2. The LCD (100) according to claim 1, wherein
the array of spacers (125) comprises *i* rows of spacers, the *n* wires (124) are distributed inside the cavity row by row, and each of the wires (124) is disposed below one row of spacers (125), where *i* is a positive integer and *i*≥*n;* or
the array of spacers (125) comprises *j* columns of spacers, the *n* wires (124) are distributed inside the cavity column by column, and each of the wires (124) is disposed below one column of spacers (125), where *j* is a positive integer and *j*≥*n.*

3. The LCD (100) according to claim 2, wherein the *n* wires (124) comprise at least two groups of wires; and
in cases where the *n* wires (124) are distributed row by row, for each group of wires, openings are distributed evenly by staggering each opening within the group such that they are each located at a different position of a row; or
in cases where the *n* wires (124) are distributed column by column, for each group of wires, openings are distributed evenly by staggering each opening within the group such that they are each located at a different position of a column

4. The LCD (100) according to claim 2, wherein
two rows of spacers (125) distributed over two adjacent wires are adjacent to each other or separated by a predetermined number of rows of spacers; or
two columns of spacers (125) distributed over two adjacent wires are adjacent to each other or separated by a predetermined number of columns of spacers.

5. The LCD (100) according to any one of claims 1-4, wherein a number of wires (124) per unit area is greater than a predetermined threshold.

6. The LCD (100) according to any preceding claim, wherein the wires are formed as a conductive pattern etched on the upper substrate (122) or the lower substrate (121).

7. The LCD (100) according to any preceding claim, wherein
the wires (124) are metal wires; or
in cases where the array of spacers (125) is formed on the bottom surface of the upper substrate (122), the wires (124) are disposed as one row of conductive pattern or one column of conductive pattern on the top surface of the lower substrate (121); or
in cases where the array of spacers (125) is formed on the top surface of the lower substrate (121), the wires (124) are disposed as one row of conductive pattern or one column of conductive pattern on the bottom surface of the upper substrate (122).

8. A method of measuring pressure applied to the LCD (100) of any one of claims 1-7, and the method comprising:
when a press operation acted on the LCD (100) is performed, acquiring (301,401) a signal generated by each wire (124) when its first conductive terminal (124a) and second conductive terminal (124b) are electrically connected under the action of the press operation;
counting a total number of the signals (302,402); and
determining (303) a pressure value of the press operation according to the total number.

9. The method according to claim 8, wherein determining a pressure value of the press operation according to the total number, comprises:
looking for a first value corresponding to the total number according to a preset first corresponding relationship between a total number of signals and a pressure value and determining (403) the first value as the pressure value of the press operation; or
calculating a density of the signals per unit area according to the total number, determining a second value corresponding to the density according to a preset second corresponding relationship between a density of signals and a pressure value and determining (403) the second value as the pressure value of the press operation.

10. The LCD of any one of claims 1-7, the LCD further comprising:
a signal-acquiring module (510, 610) configured to, when a press operation acted on the LCD (100) is performed, acquire a signal generated by each wire (124) when its first conductive terminal (124a) and second conductive terminal (124b) are electrically connected under the action of the press operation;
a counting module configured (520, 620) to count a total number of the signals acquired by the signal-acquiring module; and
a pressure-value-determining module (530, 630) configured to determine a pressure value of the press operation according to the total number counted by the counting module.

11. The LCD according to claim 10, wherein the pressure-value-determining module comprises:
a first determining sub-module (631) configured to determine a first value corresponding to the total number according to a preset first corresponding relationship between a total number of signals and a pressure value and determine the first value as the pressure value of the press operation; or
a second determining sub-module (632) configured to calculate a density of the signals per unit area according to the total number, determine a second value corresponding to the density in a preset second corresponding relationship between a density of signals and a pressure value, and determine the second value as the pressure value of the press operation.

12. A device for measuring the pressure of a touch operation, the device comprising:
the LCD (100) according to any one of claims 1-7;
a processor (720); and
a memory (704) for storing instructions executable by the processor;
wherein the processor (720) is configured to perform the method of any of claims 8 or 9.

13. A computer program, which when being executed on a processor, causes it to perform the method according to any one of claims 8 and 9.

14. A computer usable medium having the program of claim 13 stored thereon and comprising computer-readable program means for causing a device to implement the method according to any one of claims 8 and 9.

## Patentansprüche

1. Flüssigkristallanzeige LCD (100), die Folgendes umfasst: eine Anzeigetafel (120) und eine Berührungstafel (130), die jeweils mit einem Steuerchip (110) elektrisch verbunden sind, wobei eine Oberseite der Anzeigetafel (120) auf eine Unterseite der Berührungstafel (130) geklebt ist;
wobei die Anzeigetafel (120) Folgendes umfasst: ein unteres Substrat (121); ein oberes Substrat (122), das parallel zu dem unteren Substrat (121) angeordnet ist; eine Flüssigkristallschicht (123) und eine Anzahl *n* von leitenden Drähten (124), die in dem von dem oberen Substrat (122) und dem unteren Substrat (121) definierten Hohlraum eingeschlossen sind; eine Anordnung von vorstehenden Abstandshaltern (125), die in dem Hohlraum angeordnet sind, wobei die Anordnung von vorstehenden Abstandshaltern (125) auf der Unterseite des oberen Substrats (122) und/oder auf der Oberseite des unteren Substrats (121) ausgebildet sind, wobei n eine positive ganze Zahl ist;
**dadurch gekennzeichnet, dass**
jeder der Drähte (124) innerhalb des Hohlraums ein erstes und ein zweites Segment umfasst, wobei das erste Segment einen ersten leitenden Anschluss (124a) hat und das zweite Segment einen zweiten leitenden Anschluss (124b) hat, die sich jeweils an den Enden des Drahtes über die Länge des Drahtes innerhalb des Hohlraums befinden, wobei die Öffnung zwischen dem ersten leitenden Anschluss und dem zweiten leitenden Anschluss einen Schalter zusammen mit einem entsprechenden einen der der Öffnung zugewandten Abstandshalter bildet;
wobei die LCD so konfiguriert ist, dass der erste leitende Anschluss (124a) und der zweite leitende Anschluss (124b) elektrisch getrennt sind, wenn kein Druck auf die LCD aufgebracht wird;
wobei die LCD so konfiguriert ist, dass der erste leitende Anschluss (124a) und der zweite leitende Anschluss (124b) durch den entsprechenden Abstandshalter (125) elektrisch verbunden sind, wenn Druck auf die LCD aufgebracht wird;
wobei die Abstandshalter (125) aus einem leitenden Material gefertigt oder die Unterseiten der Abstandshalter (125) mit leitendem Material beschichtet sind;
und wobei:
die Öffnung sich auf dem Substrat gegenüber dem Substrat befindet, auf dem der entsprechende Abstandshalter ausgebildet ist.

2. LCD (100) nach Anspruch 1, wobei
die Anordnung von Abstandshaltern (125) *i* Reihen von Abstandshaltern umfasst, wobei die *n* Drähte (124) reihenweise innerhalb des Hohlraums verteilt sind und jeder der Drähte (124) unterhalb einer Reihe von Abstandshaltern (125) angeordnet ist, wobei *i* eine positive ganze Zahl ist und *i*≥*n* ist; oder
die Anordnung von Abstandshaltern (125) *j* Spalten von Abstandshaltern umfasst, die n Drähte (124) spaltenweise innerhalb des Hohlraums verteilt sind und jeder der Drähte (124) unterhalb einer Spalte von Abstandshaltern (125) angeordnet ist, wobei *j* eine positive ganze Zahl ist und *j*≥*n* ist.

3. LCD (100) nach Anspruch 2, wobei die *n* Drähte (124) wenigstens zwei Gruppen von Drähten umfassen; und
wobei in Fällen, in denen die *n* Drähte (124) reihenweise verteilt sind, für jede Gruppe von Drähten Öffnungen gleichmäßig durch Staffeln jeder Öffnung innerhalb der Gruppe verteilt sind, so dass sie sich jeweils an einer anderen Position einer Reihe befinden; oder
in Fällen, in denen die *n* Drähte (124) spaltenweise verteilt sind, für jede Gruppe von Drähten Öffnungen gleichmäßig durch Staffeln jeder Öffnung innerhalb der Gruppe verteilt sind, so dass sie sich jeweils an einer anderen Position einer Spalte befinden.

4. LCD (100) nach Anspruch 2, wobei
zwei Reihen von Abstandshaltern (125), die über zwei benachbarte Drähte verteilt sind, einander benachbart oder um eine vorbestimmte Anzahl von Abstandshalterreihen getrennt sind; oder
zwei Spalten von Abstandshaltern (125), die über zwei benachbarte Drähte verteilt sind, einander benachbart oder durch eine vorbestimmte Anzahl von Abstandshalterspalten getrennt sind.

5. LCD (100) nach einem der Ansprüche 1-4, wobei eine Anzahl von Drähten (124) pro Flächeneinheit größer ist als eine vorbestimmte Schwelle.

6. LCD (100) nach einem vorherigen Anspruch, wobei die Drähte in einem leitenden Muster ausgebildet sind, das auf das obere Substrat (122) oder das untere Substrat (121) geätzt ist.

7. LCD (100) nach einem vorherigen Anspruch, wobei
die Drähte (124) Metalldrähte sind; oder
in Fällen, in denen die Anordnung von Abstandshaltern (125) auf der Unterseite des oberen Substrats (122) ausgebildet ist, die Drähte (124) als eine leitende Musterreihe oder eine leitende Musterspalte auf der Oberseite des unteren Substrats (121) angeordnet sind; oder
in Fällen, in denen die Anordnung von Abstandshaltern (125) auf der Oberseite des unteren Substrats (121) ausgebildet ist, die Drähte (124) als eine leitende Musterreihe oder eine leitende Musterspalte auf der Unterseite des oberen Substrats (122) angeordnet sind.

8. Verfahren zum Messen von auf die LCD (100) nach einem der Ansprüche 1-7 aufgebrachtem Druck, wobei das Verfahren Folgendes beinhaltet:
Erfassen (301, 401), wenn ein Druck auf die LCD (100) aufgebracht wird, eines Signals, das von jedem Draht (124) erzeugt wird, wenn sein erster leitender Anschluss (124a) und sein zweiter leitender Anschluss (124b) elektrisch unter der Wirkung des Druckvorgangs verbunden werden;
Zählen einer Gesamtzahl der Signale (302, 402); und
Bestimmen (303) eines Druckwertes des Druckvorgangs gemäß der Gesamtzahl.

9. Verfahren nach Anspruch 8, wobei das Bestimmen eines Druckwertes des Druckvorgangs gemäß der Gesamtzahl Folgendes beinhaltet:
Suchen nach einem der Gesamtzahl entsprechenden ersten Wert gemäß einer voreingestellten ersten entsprechenden Beziehung zwischen einer Gesamtzahl von Signalen und einem Druckwert, und Bestimmen (403) des ersten Wertes als den Druckwert des Druckvorgangs; und
Berechnen einer Dichte der Signale pro Flächeneinheit gemäß der Gesamtzahl, Bestimmen eines zweiten Werts entsprechend der Dichte gemäß einer voreingestellten zweiten entsprechenden Beziehung zwischen einer Dichte von Signalen und einem Druckwert, und Bestimmen (403) des zweiten Druckwerts als den Druckwert des Druckvorgangs.

10. LCD nach einem der Ansprüche 1-7, wobei die LCD ferner Folgendes umfasst:
ein Signalerfassungsmodul (510, 610), konfiguriert zum Erfassen, wenn ein Druck auf die LCD (100) aufgebracht wird, eines Signals, das von jedem Draht (124) erzeugt wird, wenn sein erster leitender Anschluss (124a) und sein zweiter leitender Anschluss (124b) unter der Wirkung des Druckvorgangs elektrisch miteinander verbunden sind;
ein Zählmodul (520, 620), konfiguriert zum Zählen einer Gesamtzahl der von dem Signalerfassungsmodul erfassten Signale; und
ein Druckwertbestimmungsmodul (530, 630), konfiguriert zum Bestimmen eines Druckwerts des Druckvorgangs gemäß der von dem Zählmodul gezählten Gesamtzahl.

11. LCD nach Anspruch 10, wobei das Druckwertbestimmungsmodul Folgendes umfasst:
ein erstes Bestimmungssubmodul (631), konfiguriert zum Bestimmen eines ersten Wertes entsprechend der Gesamtzahl gemäß einer voreingestellten ersten entsprechenden Beziehung zwischen einer Gesamtzahl von Signalen und einem Druckwert und Bestimmen des ersten Wertes als den Druckwert des Druckvorgangs; oder
ein zweites Bestimmungssubmodul (632), konfiguriert zum Berechnen einer Dichte der Signale pro Flächeneinheit gemäß der Gesamtzahl, Bestimmen eines zweiten Wertes entsprechend der Dichte in einer voreingestellten zweiten entsprechenden Beziehung zwischen einer Dichte von Signalen und einem Druckwert, und Bestimmen des zweiten Wertes als den Druckwert des Druckvorgangs.

12. Vorrichtung zum Messen des Drucks eines Berührungsvorgangs, wobei die Vorrichtung Folgendes umfasst:
die LCD (100) nach einem der Ansprüche 1-7;
einen Prozessor (720); und
einen Speicher (704) zum Speichern von von dem Prozessor ausführbaren Befehlen;
wobei der Prozessor (720) zum Ausführen des Verfahrens nach Anspruch 8 oder 9 konfiguriert ist.

13. Computerprogramm, das bei Abarbeitung auf einem Prozessor bewirkt, dass dieser das Verfahren nach einem der Ansprüche 8 und 9 ausführt.

14. Von einem Computer benutzbares Medium, auf dem das Programm von Anspruch 13 gespeichert ist und das computerlesbare Programmmittel umfasst, um zu bewirken, dass eine Vorrichtung das Verfahren nach einem der Ansprüche 8 und 9 ausführt.

## Revendications

1. Affichage à cristaux liquides LCD (100) comprenant : un panneau d'affichage (120) et un panneau tactile (130), chacun connecté électriquement à une puce de commande (110), une surface supérieure du panneau d'affichage (120) étant collée à une surface inférieure du panneau tactile (130) ;
dans lequel le panneau d'affichage (120) comprend : un substrat inférieur (121) ; un substrat supérieur (122) disposé parallèlement au substrat inférieur (121) ; une couche de cristaux liquides (123) et un nombre *n* de fils (124) enfermé dans la cavité définie par le substrat supérieur (122) et le substrat inférieur (121) ; un réseau de pièces d'écartement saillantes (125) disposé à l'intérieur de la cavité, le réseau de pièces d'écartement saillantes (125) étant formé sur au moins l'une de la surface inférieure du substrat supérieur (122) et de la surface supérieure du substrat inférieur (121), *n* étant un nombre entier positif ;
**caractérisé en ce que** :
chacun des fils (124) à l'intérieur de la cavité comprend des premier et second segments, le premier segment présentant une première borne conductrice (124a) et le second segment présentant une seconde borne conductrice (124b), situés entre l'une et l'autre extrémité du fil le long du fil à l'intérieur de la cavité, l'ouverture entre la première borne conductrice et la seconde borne conductrice formant un commutateur avec une pièce d'écartement correspondante des pièces d'écartement faisant face à l'ouverture ;
le LCD étant configuré de telle sorte que la première borne conductrice (124a) et la seconde borne conductrice (124b) soient déconnectées électriquement quand une opération de pression n'est pas appliquée sur le LCD ;
le LCD étant configuré de telle sorte que la première borne conductrice (124a) et la seconde borne conductrice (124b) soient connectées électriquement par la pièce d'écartement correspondante (125) quand une opération de pression est appliquée sur le LCD ;
les pièces d'écartement (125) sont réalisées en un matériau conducteur, ou les surfaces inférieures des pièces d'écartement (25) sont revêtues d'un matériau conducteur ;
et dans lequel :
l'ouverture est située sur le substrat opposé au substrat où est formée la pièce d'écartement correspondante.

2. LCD (100) selon la revendication 1, dans lequel
le réseau de pièces d'écartement (125) comprend *i* rangées de pièces d'écartement, les *n* fils (124) sont répartis à l'intérieur de la cavité rangée par rangée, et chacun des fils (124) est disposé en dessous d'une rangée de pièces d'écartement (125), *i* étant un nombre entier positif et *I*≥*n* ; ou
le réseau de pièces d'écartement (125) comprend *j* colonnes de pièces d'écartement, les *n* fils (124) sont répartis à l'intérieur de la cavité colonne par colonne, et chacun des fils (124) est disposé en dessous d'une colonne de pièces d'écartement (125), *j* étant un nombre entier positif et *j≥n.*

3. LCD (100) selon la revendication 2, dans lequel les *n* fils (124) comprennent au moins deux groupes de fils ; et
quand les *n* fils (124) sont répartis rangée par rangée, pour chaque groupe de fils, des ouvertures sont réparties uniformément en mettant en quinconce chaque ouverture dans le groupe de telle sorte qu'elles se trouvent chacune à une position différente d'une rangée ; ou quand les *n* fils (124) sont répartis colonne par colonne, pour chaque groupe de fils, des ouvertures sont réparties uniformément en mettant en quinconce chaque ouverture dans le groupe de telle sorte qu'elles se trouvent chacune à une position différente d'une colonne.

4. LCD (100) selon la revendication 2, dans lequel
deux rangées de pièces d'écartement (125) réparties sur deux fils adjacents sont adjacentes l'une à l'autre ou séparées par un nombre prédéterminé de rangées de pièces d'écartement ; ou
deux colonnes de pièces d'écartement (125) réparties sur deux fils adjacents sont adjacentes l'une à l'autre ou séparées par un nombre prédéterminé de colonnes de pièces d'écartement.

5. LCD (100) selon l'une quelconque des revendications 1 à 4, dans lequel un nombre de fils (124) par unité de surface est supérieur à une limite prédéterminée.

6. LCD (100) selon l'une quelconque des revendications précédentes , dans lequel les fils sont formés sous forme de motif conducteur gravé sur le substrat supérieur (122) ou sur le substrat inférieur (121).

7. LCD (100) selon l'une quelconque des revendications précédentes, dans lequel les fils (124) sont des fils métalliques; ou
quand le réseau de pièces d'écartement (125) est formé sur la surface inférieure du substrat supérieur (122), les fils (124) sont disposés en une rangée de motif conducteur ou une colonne de motif conducteur sur la surface supérieure du substrat inférieur (121) ; ou quand le réseau de pièces d'écartement (125) est formé sur la surface supérieure du substrat inférieur (121), les fils (124) sont disposés en une rangée de motif conducteur ou une colonne de motif conducteur sur la surface inférieure du substrat supérieur (122).

8. Procédé de mesure d'une pression appliquée sur le LCD (100) selon l'une quelconque des revendications 1 à 7, et le procédé comprenant :
quand une opération de pression sur le LCD (100) est exécutée, l'acquisition (301,401) d'un signal généré par chaque fil (124) quand ses première borne conductrice (124a) et seconde borne conductrice (124b) sont connectées électriquement par l'opération de pression ;
le comptage d'un nombre total des signaux (302, 402) ; et
la détermination (303) d'une valeur de pression de l'opération de pression en fonction du nombre total.

9. Procédé selon la revendication 8, da la détermination d'une valeur de pression de l'opération de pression en fonction du nombre total comprend :
la recherche d'une première valeur correspondant au nombre total en fonction d'une première relation correspondante prédéfinie entre un nombre total de signaux et une valeur de pression et la détermination (403) de la première valeur comme étant la valeur de pression de l'opération de pression ; ou
le calcul d'une densité des signaux par unité de surface en fonction du nombre total, la détermination d'une seconde valeur correspondant à la densité en fonction d'une seconde relation correspondante prédéfinie entre une densité de signaux et une valeur de pression et la détermination (403) de la seconde valeur comme étant la valeur de pression de l'opération de pression.

10. LCD selon l'une quelconque des revendications 1 à 7, le LCD comprenant en outre:
un module d'acquisition de signaux (510, 610) configuré pour, quand une opération de pression sur le LCD (100) est exécutée, acquérir un signal généré par chaque fil (124) quand ses première borne conductrice (124a) et seconde borne conductrice (124b) sont connectées électriquement par l'opération de pression ;
un module de comptage (520, 620) configuré pour compter un nombre total des signaux acquis par le module d'acquisition de signaux ; et
un module de détermination de valeur de pression (530, 630) configuré pour déterminer une valeur de pression de l'opération de pression en fonction du nombre total compté par le module de comptage.

11. LCD selon la revendication 10, dans leque le module de détermination de valeur de pression comprend :
un premier sous-module de détermination (631) configuré pour déterminer une première valeur correspondant au nombre total en fonction d'une première relation correspondante entre un nombre total de signaux et une valeur de pression et déterminer la première valeur comme étant la valeur de pression de l'opération de pression ; ou
un second sous-module de détermination (632) configuré pour calculer une densité des signaux par unité de surface en fonction du nombre total, déterminer une seconde valeur correspondant à la densité dans une seconde relation correspondante prédéfinie entre une densité de signaux et une valeur de pression, et déterminer la seconde valeur comme étant la valeur de pression de l'opération de pression.

12. Dispositif de mesure de la pression d'une opération de toucher, le dispositif comprenant :
le LCD (100) selon l'une quelconque des revendications 1 à 7 ;
un processeur (720) ; et
une mémoire (704) destinée à mémoriser des instructions exécutables par le processeur ;
dans leque le processeur (720) est configuré pour exécuter le procédé selon l'une quelconque des revendications 8 ou 9.

13. Programme informatique, qui, à son exécution sur un processeur, amène celui-ci à exécuter le procédé selon l'une quelconque des revendications 8 et 9.

14. Support utilisable sur ordinateur sur lequel est mémorisé le programme selon la revendication 13 et comprenant un moyen de programme lisible par ordinateur pour amener un dispositif à mettre en oeuvre le procédé selon l'une quelconque des revendications 8 et 9.
